# EUROPEAN PATENT APPLICATION

(11) **EP 1 482 734 A2**
(43) Date of publication of application: **01.12.2004**
(21) Application number: 04008441.0
(22) Date of filing: 07.04.2004
(51) Int. Cl.: H04N 7/16

(54) **Process and system for identifying a position in video using content-based video timelines**

(30) Priority: 28.05.2003 US 446902
(71) Applicant: MICROSOFT CORPORATION, Redmond, WA 98052 (US)
(72) Inventor: Bargeron, David M., Seattle, Washington 98117 (US); Caspi, Yaron, Hadaray Semel, Nes-Zioan 74086 (IL)
(74) Representative: Grünecker, Kinkeldey, Stockmair & Schwanhäusser Anwaltssozietät

(57) **Abstract**

A process and system for processing a video to reliably identify a position in the video. The video position identification process and system use content-based video timelines. These timelines are composed of an ordered sequence of video "fingerprints" or "signatures" of video content that exploit the spatial characteristics in frame images of the video and reliably identify position even if the video has been modified, such as with insertions or deletions.

## Description

### TECHNICAL FIELD

The present invention relates in general to video processing and more particularly to a process and system for reliably identifying a position in a video using content-based video timelines. These timelines are composed of an ordered sequence of video "fingerprints" or "signatures" of video content that exploit the spatial characteristics in frame images of the video and reliably identify position even if the video has been modified, such as with insertions or deletions.

### BACKGROUND OF THE INVENTION

Video is a popular and pervasive medium. Video can be found in almost every living room and on an increasing number of end-user personal computers (PCs). Video comes in a staggering variety of forms, formats, and compressions, and that variety continues to grow every year. This variety presents a huge challenge for video software applications that need to reliably identify positions in video streams. By way of example, these video software applications include summarization, database indexing, content synchronization, and annotation of video streams.

Reliably identifying a position in a video stream is difficult because the "same" video content in the video stream may undergo subtle modifications throughout its lifetime. This can make it impossible to use frame numbers or embedded time codes to reliably identify position. This is especially true of commercial television (TV) programs, for which modifications may include insertion and deletion of short clips. For example, different broadcasts of the same movie often include different sets of commercials. In addition, other common modifications include format conversions, such as from National Television Standards Committee (NTSC), a format used in the United States, to Phase Alternating Line (PAL), the dominant standard in Europe. Further, other modifications may include storage changes (such as changes to compression format, compression parameters or both), and time compression that may selectively drop frames.

One application where there is a need to reliably identify a position in a video stream is in a web-enabled television system. In general, a web-enabled television system refers to a group of products and technologies that enable a user to surf the Worldwide Web (or "Web") using a television. This enables content (or information) associated with a video (or TV broadcast) to be placed on the television screen while allowing the use of the Web. Thus, a user may view a basketball game and see below the game a hyperlink for more information about a certain player. Similarly, the user may see a hyperlink for information about buying his favorite teams sweatshirt or hat. This content is associated with a certain video.

One problem, however, with associating the content with the video broadcast is that there are typically different versions of the video broadcast in different areas of the country and world. The different versions may differ according to the common modifications described above. This requires manual annotation (such as insertion of hyperlinks) of the video broadcast for each version of the video broadcast. Manual annotation for each version of the video broadcast is time consuming, expensive and prone to error.

In order to avoid manual annotation of each version of a video broadcast, the content may be embedded directly in the video broadcast. Embedding involves attaching the content at a desired position in the video broadcast or in a synchronized stream in the same digital video file. One problem, however, is that the embedding technique is quite inflexible. If there are several sources that want to embed their content into the video broadcast, the video file quickly becomes quite large. Other problems with the embedding technique include security risks and difficulty in filtering and searching for desired content.

Therefore, there exists a need for a process and system that provide reliable identification of position in a video such that frame numbers and embedded time codes are not needed. Further, there exists a need a process and system that provide a flexible way of synchronizing content between differing versions of a video. Moreover, there exists a need for a process and system that can robust identify position in video and survive modification of the video due to the addition and deletion of frames, different types of compression, and different broadcast formats.

### SUMMARY OF THE INVENTION

The invention disclosed herein includes a process and a system for reliably identifying the same positions in different versions of video content. The process and system rely on per-frame content-based video "signatures". These video signatures form a content-based video timeline for the video. Content-based video timelines are a mechanism for robustly identifying positions in a video stream without relying on frame numbers or embedded time codes. A content-based video timeline is composed of an ordered sequence of video signatures. Based on the content of frames in the video, a content-based video timeline uses the video signatures to identify a particular frame or sequence of frames. These content-based video timelines are compact, quick to generate and search, and they are robust to the common modifications to a video that can render frame number and embedded time codes unreliable. These common modifications include insertions, deletions, time compression, data compression (such as Indeo, Cinepak, and MPEG IV compression), broadcast formats (such as NTSC and PAL), sentilations (such as white noise and black noise), 3:2 pull down errors (such as movies shown on television), and color shifts. The video position identification process and system provide reliable identification of position in a video such that frame numbers and embedded time codes are not needed. In addition, the process and system described herein is robust and can survive modification of the video due to the modifications listed above.

Content-based video timelines address an important class of problems. For instance, in video summarization and database indexing, content-based video timelines provide an efficient mechanism for marking and recovering the position of significant objects and events in the video stream. Moreover, because the timelines are robust, they can be stored separately from the video stream itself. This means that content-based video timelines can be used to support synchronizing third-party content and positioning annotations.

For example, consider the following problem. A user in New York City annotates the local version of a television program to point out the important parts. In other words, the New York City user creates a summary of the program using annotations. Later, the New York City user would like to share the annotations with a friend in Chicago. The friend, however, only has access to the local Chicago version of the program. This version, which includes a different set of commercials, starts a few minutes later in the program because it was joined "already in progress" following a sports broadcast. How can the user in Chicago see the New York user's annotations at the correct positions in his local version of the program?

By using the video position identification process and system described herein, the Chicago user can place the annotations created by the New York City user at the correct locations in the local Chicago version of the program. By generating a content-based video timeline, the New York user can identify the important parts of the program in a highly accurate and robust manner. He can send his annotations, along with the relevant parts or fragments of the timeline, to his friend in Chicago via e-mail. Software on the Chicago user's machine can use the video timeline fragments to locate the correct positions in the local Chicago version of the program. This is true even though the Chicago version differs significantly from the New York version.

### BRIEF DESCRIPTION OF THE DRAWINGS

The present invention can be further understood by reference to the following description and attached drawings that illustrate aspects of the invention. Other features and advantages will be apparent from the following detailed description of the invention, taken in conjunction with the accompanying drawings, which illustrate, by way of example, the principles of the present invention.

Referring now to the drawings in which like reference numbers represent corresponding parts throughout:
FIG. 1 is a block diagram illustrating a general overview of the video position identification process and system disclosed herein incorporated into an annotation system, and is shown for illustrative purposes only.
FIG. 2 is a block diagram illustrating a general overview of the video position identification process and system shown in FIG. 1.
FIG. 3A is block diagram illustrating an overview of the video position identification system shown in FIGS. 1 and 2 for generating signatures for a first version of a video.
FIG. 3B is block diagram illustrating an overview of the video position identification system shown in FIGS. 1 and 2 for generating signatures for a second version of a video.
FIG. 3C is a block diagram illustrating an overview of the video position identification system for matching the signatures generated in FIGS. 3A and B.
FIG. 4 is a block diagram illustrating the details of the signature generation and extraction module shown in FIGS. 3A and B.
FIG. 5 is a detailed block diagram of the morphological cleaning module 450 shown in FIG. 4.
FIG. 6A is a detailed block diagram illustrating a first embodiment of the short signature module shown in FIG. 4.
FIG. 6B is a detailed block diagram illustrating a second embodiment of the short signature module shown in FIG. 4.
FIG. 7 is a detailed block diagram illustrating the further details of the modified PCA module shown in FIG. 6B.
FIG. 8 is a block diagram illustrating the details of the signature matching module shown in FIG. 3C.
FIG. 9 is a detailed block diagram of the reliability module shown in FIG. 8.
FIG. 10 is a general flow diagram illustrating the operation of the video position identification system shown in FIGS. 3A-C.
FIG. 11 is a flow diagram illustrating additional details of the operation of the video position identification system method shown in FIG. 10.
FIG. 12 illustrates the details of the signature generation and extraction (or feature extraction) process used to produce signatures in a working example.
FIG. 13 illustrates the details of the signature matching process used to recover positions in the working example.
FIG. 14 is a graph illustrating the reliability feature used in the working example.
FIG. 15 illustrates an example of a suitable computing system environment in which the video position identification process and system may be implemented.

### DETAILED DESCRIPTION OF THE INVENTION

In the following description of the invention, reference is made to the accompanying drawings, which form a part thereof, and in which is shown by way of illustration a specific example whereby the invention may be practiced. It is to be understood that other embodiments may be utilized and structural changes may be made without departing from the scope of the present invention.

### I. Introduction

A broad array of multimedia applications require a robust technique for reliably identifying positions in a video stream. In some situations, metadata such as frame numbers or embedded time-code are sufficient to determine position. Frequently, however, modifications to the video stream alter this metadata, rendering it useless. By way of example, commercial television commonly experiences modification such as insertion and deletion of advertisements, format conversion, and time compression.

The video position identification process and system described herein includes a robust technique for identifying position in a video stream using content-based video timelines. The content-based video timelines are composed of an ordered sequence of low-dimensional video signatures extracted from the of video content. These signatures are not based on statistical techniques (such as color histograms). Instead, the signatures exploit spatial characteristics within frames of the video stream. Each signature is a compact representation of a single frame image that is chosen to best distinguish it from other frame images. In contiguous sequences of from 10 to 100 signatures, positions in the video stream can be uniquely identified. Signatures are highly discriminative and are robust to many common forms of modification that may be performed on a video. The video position identification process and system described herein is efficient and may be performed in real time.

### II. General Overview

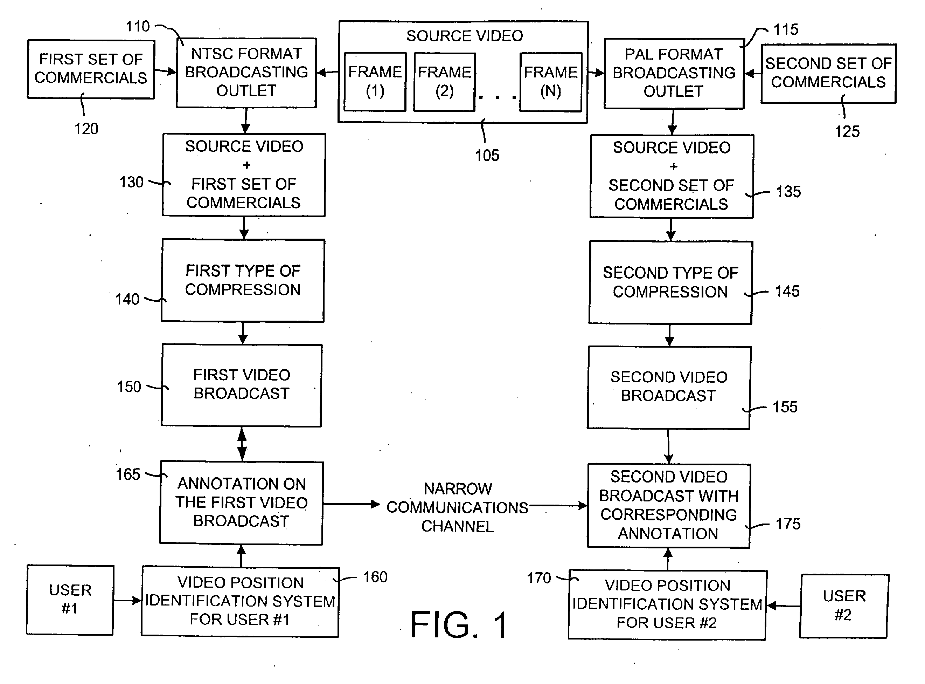

As an example of how the invention described herein may be implemented, the following example is offered. It should be noted that the following implementation is only one of several ways in which the invention may be used. FIG. 1 is a block diagram illustrating a general overview of the video position identification process and system disclosed herein incorporated into an annotation system, and is shown for illustrative purposes only. In general, the annotation system 100 allows a first user to create an annotation based on a first video, send the annotation to a second user, and place the annotation created by the first user in a second video. This is true even though the first video may differ significantly from the second video.

Specifically, referring to FIG. 1, a source video 105 contains a plurality of frames (frame (1) to frame (N)). This source video is being broadcast on two different outlets, namely, a first broadcasting outlet 110 broadcasting in a NTSC format and a second broadcasting outlet 115 broadcasting in a PAL format. For example, these two broadcasting outlets 110, 115 may be two different television networks, with one located in the United States (using the NTSC format) and one located in Europe (using the PAL format). Different commercials are added to the source video 105. The NTSC format broadcasting outlet 110 adds a first set of commercials 120 to the source video 105. This first set of commercials 120 is geared to the standards and tastes of a local audience. Similarly, a second set of commercials 125 is added by the PAL format broadcasting outlet 115 to the source video 105.

As shown in FIG. 1, this results in a source video + first set of commercials 130 and a source video + second set of commercials 135. It should be noted that the resultant videos 130, 135 obtained by adding the commercials may be of different lengths. Further, the first resultant video 130 is compressed by a first type of compression 140 and the second resultant video 145 is compressed by a second type of compression 145. For example, the first type of compression 140 may be Indeo, a video compression/decompression (codec) technology, and the second type of compression 145 may be MPEP IV, a competing codec technology.

The final, broadcast version of the source video 105 is different depending on who is doing the broadcasting. In other words, a first video broadcast 150 is different from a second video broadcast 155 due to different commercials added, different types of compression used, different broadcast formats, and different broadcast noise. Thus, what user #1 sees when he views the first video broadcast 150 transmitted by the NTSC format broadcasting outlet 110 is different from what user #2 sees when she views the second video broadcast 155 transmitted by the PAL format broadcasting outlet 115.

User #1 uses his video position identification system 160 to produce annotations on the first video broadcast 165. By way of example, the first video broadcast 150 may contain a scene of a beach with houses in the background. User #1 may annotate the first video broadcast 150 such that a circle is made around one of the houses in the background with an indication that this is User #1's "house on the coast". This annotation is sent to User #2 over a narrow communications channel. By way of example, this narrow communications channel includes e-mail, cell phone, the Internet and instant messaging (IM) services. User #2 uses her video position identification system 170 to match the annotation to the correct position in the second video broadcast 155 version of the source video 105. This creates a second video broadcast with a corresponding annotation 175. Thus, using the video position identification system and process described herein, User #1 is able to send User #2 his annotation of his version of the source video 105 and User #2 is able to match up that annotation to the correct location in her version of the source video 105.

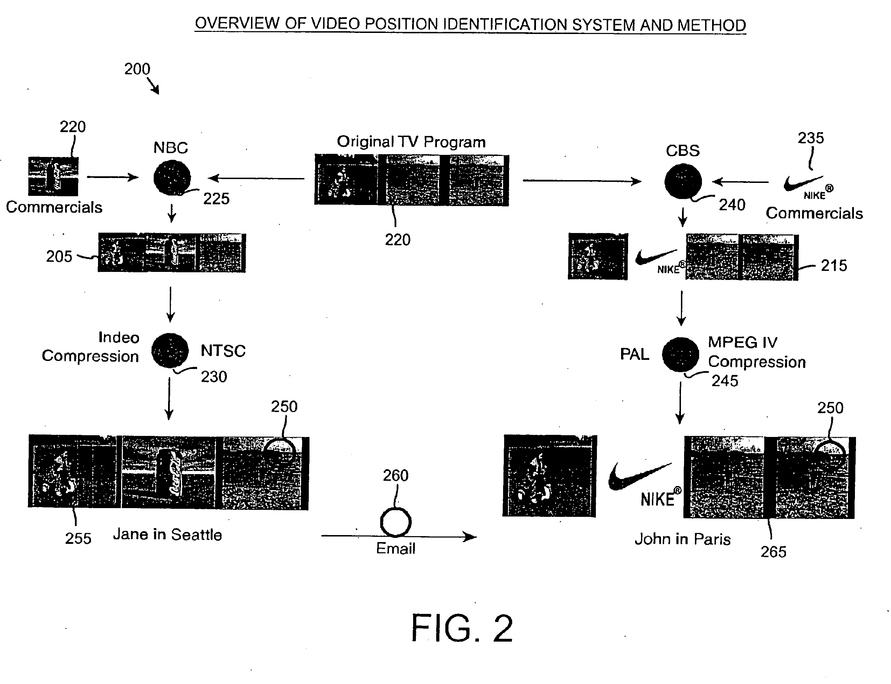

FIG. 2 is a block diagram illustrating a general overview of the video position identification method and system illustrated in FIG. 1. The scenario used in this general overview is a commercial television program shown in different markets. Commercial television programs undergo a surprising number of subtle modifications before they are actually displayed on a viewer's television set. Consequently, frame numbers and time offsets are often unreliable as a means of identifying positions within a video stream.

The video position identification method and system 200 shown in FIG. 2 is robust to many common modifications yet is lightweight and inexpensive. It should be noted that the video position identification system for User #1 160 and the video position identification system for User #2 170 are specific implementations of the video position identification system 200 shown in FIG. 2. In general, the video position identification method and system 200 allows positions in a first version 205 of an original television program 210 to be matched up to positions in a second version 215 of the original television program 210. Because the method and system 200 are robust to many types of modifications, this is true even if the first version 205 and the second version 215 are different from each other, as is the case in FIG. 2.

In particular, as illustrated in FIG. 2, the first version 205 is created by taking the original television program 210 and adding a first set of commercials 220. This first version 205 is broadcasted by NBC 225 in a NTSC broadcast format and is compressed using Indeo compression 230. The broadcasted first version 205 is received by Jane in Seattle on her television set.

Meanwhile, the second version 215 is created by taking the original television program 210 and adding a second set of commercials 235. This second version 215 is broadcasted by CBS 240 in a PAL broadcast format and is compressed using MPEG IV compression 245. The broadcasted second version 215 is received by John in Paris on his television set.

When Jane receives the first version 205, she can annotate the first version 205 as desired. FIG. 2 illustrates that Jane has annotated the first version 205 by making a circle 250 around an object in a certain frame (represented in FIG. 2 as the final frame) of the first version 205. This annotation creates an annotated first version 255. It should be noted that although a single annotation is illustrated, typically there will be multiple annotations contained in the annotated first version 255. Annotations 260 contained in the annotated first version 255 are sent by e-mail from Jane in Seattle to John in Paris. John receives the annotations 260 and, using the video position identification method and system 200 disclosed herein, is able to recover the positions in his second version 215 at which the annotations 260 were made by Jane in her first version 205. This generates an annotated second version 265 for John in Paris containing Jane's annotations 260, including the circle 250 around the object in the respective frame.

### III. System Overview and Component Details

An overview of how the video position identification method and system 200 allow Jane to create the annotations 260 and allow John to recover the correct positions for Jane's annotations 260 will now be discussed. First, an overview of the system will be provided. Next, the details of each component in the system will be discussed.

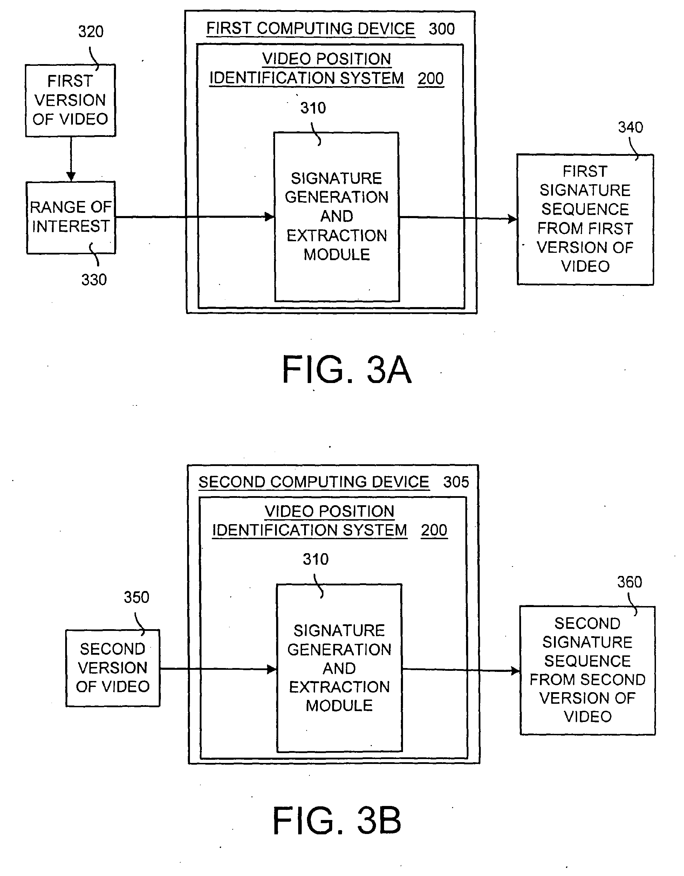

FIGS. 3A-C illustrate an overview of the video position identification system 200 shown in FIG. 2. The video position identification system 200 is designed to operate on a computing device, the details of which are described below. In general, the video position identification system 200 allows a user to create annotations in a first version of a video, generates signatures based on content of the first version and a second version of the video, and then matches the signatures to recover positions in the second version that were annotated in the first version. Signatures are generated from the content of the video itself, and metadata (such as frame number and time offset) are ignored. Video content includes any information that is content-based, such as, by way of example, visual content in a video frame, any audio track video frame content, audio content synchronized with the video, and closed captioning information. Signatures are generated using these types of video frame content.

FIG. 3A is block diagram illustrating an overview of the video position identification system 200 for generating signatures for a first version of a video 320. The video position identification system 200 resides on a first computing device 300 at a first location. For example, using the example in FIG. 2, the first location would be on Jane's computer in Seattle. Jane annotates the first version of the video 320 and a range of interest 330 is defined by these annotations. The range of interest 330 is at least a portion of the first version 320 and contains at least one frame. The signature generation and extraction module 310 processes the first version of the video 320 and, based on the content of the video frames within the range of interest, generates a first signature sequence 340. The first signature sequence 340 is only a portion of all of the signatures that could be generated and extracted from the first version 320. In other words, the first signature sequence contains signatures that represent the content of only the frames contained in the range of interest 330. In an alternate embodiment, a preprocessing step may be used to extract all signatures from the first version 320 such that the signatures do not have to be extracted each time a range of interest is identified.

FIG. 3B is block diagram illustrating an overview of the video position identification system 200 for generating signatures for a second version of a video 350. The video position identification system 200 resides on a second computing device 305 at a second location. Once again, using the example in FIG. 2, the second location would be on John's computer in Paris. The video position identification system 200 on John's computer inputs the second version of the video 350 that John will view. The signature generation and extraction module 310 process the second version 350 and, based on frame content, generates a second signature sequence 360. The second signature sequence contains all signatures that can be generated and extracted from the frame content of the second version 350.

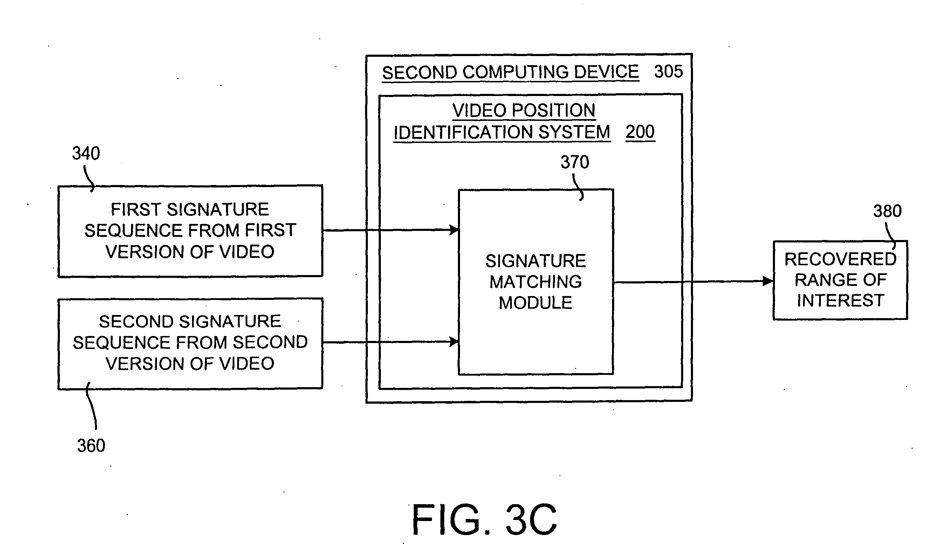

FIG. 3C is a block diagram illustrating an overview of the video position identification system for matching the signatures generated in FIGS. 3A and B. This signature matching occurs on the second computing device 305, or, using again the example in FIG. 2, on John's computer in Paris. John receives the first signature sequence 340 from Jane. This first signature sequence 340, based on video content from the first version 320 and created on Jane's computer, and the second signature sequence 360, based on video content from the second version 350 and created on John's computer, then are processed by a signature matching module 370. The result is a recovered range of interest 380 that recovers positions of the annotations in the second version 350 of the video seen by John that were made by Jane in the first version 320.

The video position identification system 200 provides a reliable and robust system for identifying positions between different versions of a video. In effect, the system "anchors" any material (such as an annotation) to those positions. This allows the material to be passed between the different versions that may have similar but not exactly the same content. The components of the video position identification system 200 shown in FIGS. 3A-C will now be discussed in detail.

The video position identification system 200 includes the signature generation and extraction module 3100 and the signature matching module 3700. The signature generation and extraction module 310 inputs video frames and extracts signatures based on the content of those frames. The signatures are representative of the content contained on the video frames.

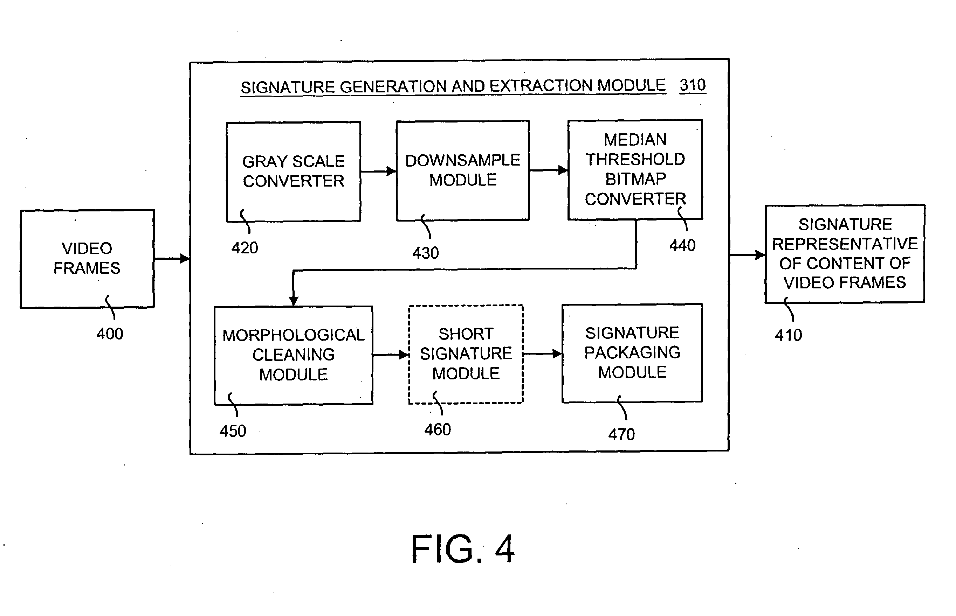

FIG. 4 is a block diagram illustrating the details of the signature generation and extraction module 310. In general, the signature generation and extraction module 310 inputs a video frame 400 and processes the video frame 400 to generate a signature 410, where the signature is representative of the content contained in the frame. The signature generation and extraction module 310 includes a gray scale converter 420, a downsample module 430, and a median threshold bitmap converter 440. The signature generation and extraction module 310 further includes a morphological cleaning module 450, an optional (as denoted by the dashed lines) short signature module 460, and a signature packaging module 470.

The gray scale converter 420 converts the video frames 400 to gray scale at each frames current resolution to produce a gray scale frame. The downsample module 430 is used to downsample the gray scale frame until a lower resolution of the gray scale frame is created. In one embodiment, the downsample module 430 downsamples from the standard SIFF video frame size to a 30x40 frame size by constructing a Gaussian pyramid. The resultant low-resolution gray scale frame is sent to the median threshold bitmap converter 440. The median threshold bitmap converter 440 is used to convert the low-resolution gray scale frame into a bitmap consisting of 0's and 1's (or 0/1 bitmap version of the frame). The median threshold bitmap converter 440 uses the frame's median gray level as a threshold value to ensure that the number of 0's and 1's for each frame is approximately equal. This provides the greatest discriminatory power for a signature.

What is left after processing by the median threshold bitmap converter 440 is a signature frame containing an approximately equal number of 0's and 1's. This signature frame is processed by the morphological cleaning module 450 to reduce and smooth out noise that may be present in the signature frame. The morphological cleaning module 450 is an iterative module, whereby a kernel adjustment is performed to maintain a balance of 0's and 1's. The morphological cleaning module 450 generates an initial or "long" signature for each frame. In one embodiment, where the result of the downsampling module 430 is a 30x40 frame image, the "long" signature is 30x40 = 1200 bits.

In some circumstances, as explained below, the long signature is not needed and a short signature will suffice. Using a short signature increases the speed of the video position identification system 200. An optional module is the short signature module 460, which downsamples the long signature into a short signature containing a fewer number of bits. For example, the short signature may contain 128 bits instead of the 1200 bits that may be contained in a long signature. As described in detail below, the short signature module 460 can use two different techniques to generate a mask that is applied to the long signature. Generally, the short signature module 460 performs a dimensionality reduction to reduce the number of bits in the long signature to create the short signature. The long and short signatures then are transmitted to a desired location for matching to another version of the video.

By way of example and not limitation, the signatures may be transmitted using a signature packaging module 470. The signature packaging module 470 packages each of the signatures along with other items (such as the range of interest 330 or any annotation associated with the range of interest 330) and generates a single file containing each of these items. This signature file then can be transmitted to another site. For example, referring to FIG. 2, the signature file may contain a signature sequences and annotations that are sent by e-mail from a Jane in Seattle to John in Paris. Once received by John in Paris, the transmitted signature sequences are processed by the video position identification system 200 on John's computing device 305.

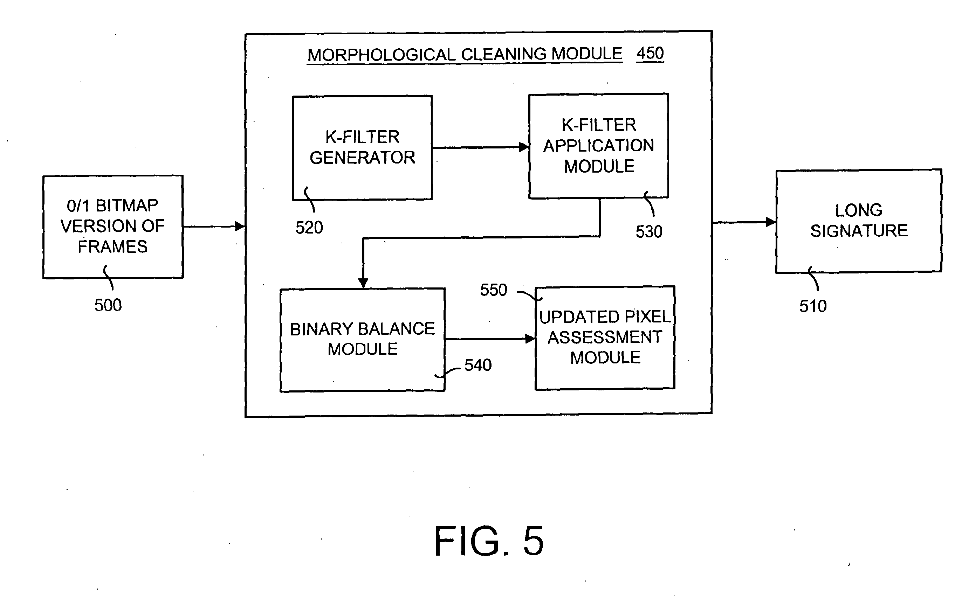

FIG. 5 is a detailed block diagram of the morphological cleaning module 450 shown in FIG. 4. In general, the morphological cleaning module 450 inputs a 0/1 bitmap version of frames 500 and outputs a long signature 510 of the frames. The morphological cleaning module 450 includes a k-filter generator 520, a k-filter application module 530, a binary balance module 540 and an updated pixel assessment module 550.

The k-filter generator 520 generates an appropriate threshold for a k-filter that processes pixels in the 0/1 bitmap version of frames 500. The k-filter application module 530 applies the k-filter to each pixel in the frame signature and set its output value to "0" or "1" depending on the number of neighboring pixels that are already equal to 1. The binary balance module 540 keeps iterating through the two previous modules 520, 530, adjusting the k-filter threshold up or down until the number of 0's and the number of 1's is approximately equal. The updated pixel assessment module 550 continually monitors the number of updated pixels for each iteration until that number falls below an updated pixel threshold. Once this occurs, the updated pixel assessment module 550 terminates the iteration process and outputs the long signature 510. The net effect of the morphological cleaning module 450 is to remove fine-grained detail from the input bitmap signature and produce a modified "long" signature that captures the gross spatial details of the original frame image from which the signature was produced.

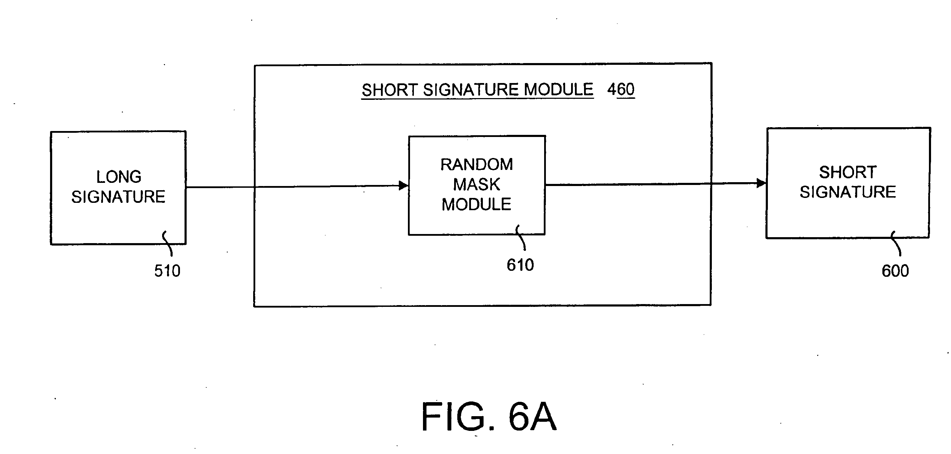

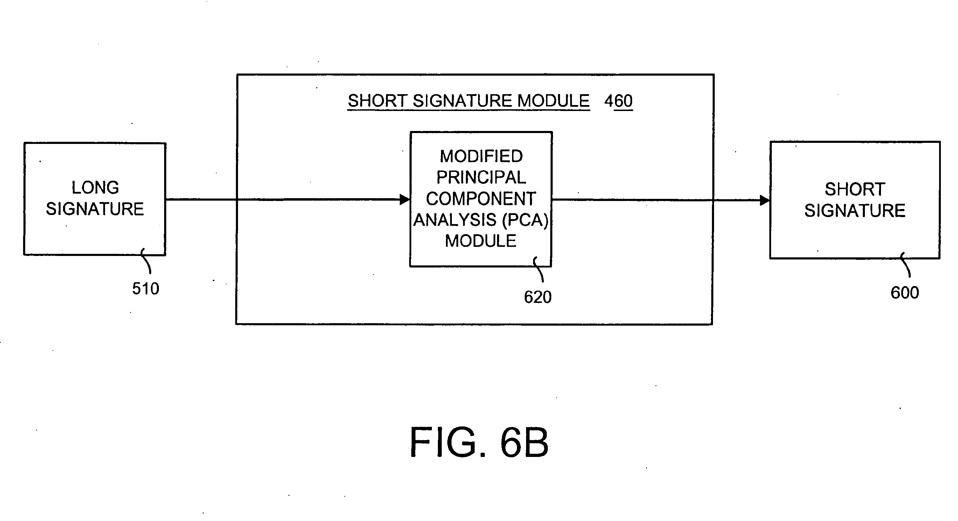

FIGS. 6A and B illustrate two embodiments of the short signature module 460 shown in FIG. 4. In general, the short signature module 460 inputs the long signature 510, creates a sampling mask to downsample the long signature 510, and applies the sampling mask to create a short signature 600. Regardless of how the sampling mask is determined, the sampling mask is used to select the bits from each long signature that are to be used to compose the corresponding short signature.

Two embodiments to create a sampling mask will now be discussed. FIG. 6A is a detailed block diagram illustrating a first embodiment of the short signature module 460 shown in FIG. 4. In this first embodiment, the short signature module 460 includes a random mask module 610 that generates a random mask to sample all of the signatures. The short signature module 460 inputs the long signature 510, and the random mask module 610 processes the long signature 510 to create a short signature 600. FIG. 6B is a detailed block diagram illustrating a second embodiment of the short signature module 460 shown in FIG. 4. In this second embodiment, the short signature module 460 includes modified Principal Component Analysis (PCA) module 620, which examines a histogram of the long signature 510 and determines the bits that are the most discriminative. The short signature module 460 inputs the long signature 510 where the long signature 510 is processed by the modified PCA module 620. The result is the short signature 600.

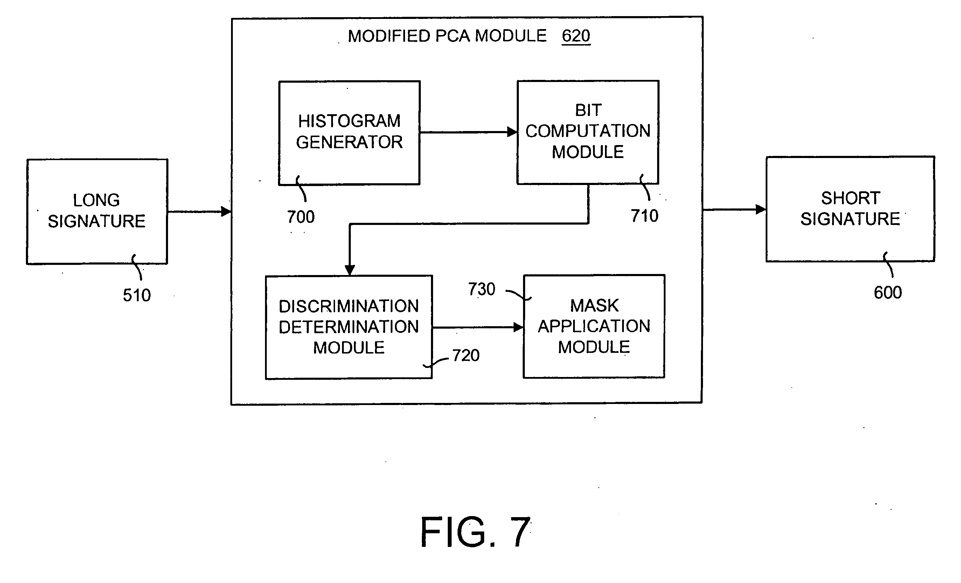

FIG. 7 is a detailed block diagram illustrating the further details of the modified PCA module 630 shown in FIG. 6B. The modified PCA module 620 includes a histogram generator 700, a bit computation module 710, a discrimination determination module 720, and a mask application module 730. The histogram generator 700 generates a histogram that examines every bit contained in the long signature 510. The bit computation module 710 then examines each bit and computes the number of times each bit is a "0" and the number of times each bit is a "1" in the sequence of long signatures. The discrimination determination module 720 chooses the bits that are approximately 50% of the time equal to "0" and approximately 50% of the time equal to "1". These bits are defined as the most discriminative bits. A mask then is generated using the most discriminative bits. The mask application module 730 then applies this mask to the long signature 510 to generate the short signature 600.

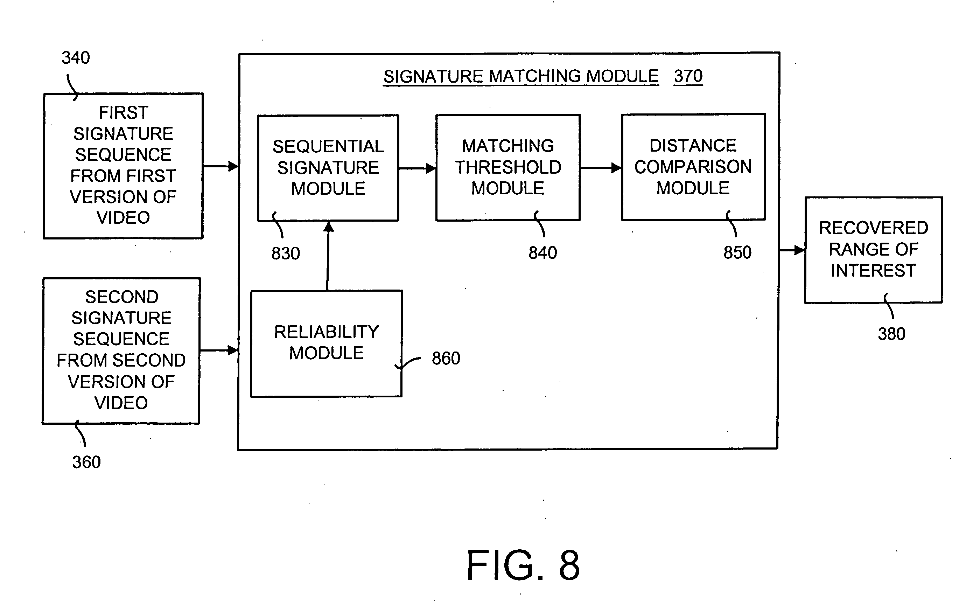

FIG. 8 is a block diagram illustrating the details of the signature matching module 370 shown in FIG. 3C. Generally, the signature matching module 370 inputs two signatures sequences and matches up signatures to their correct positions. Specifically, the signature matching module 370 inputs the first signature sequence 340 and the second signature sequence 370. The first signature sequence 340 represents the content some unique region (or range of interest) in a first version of a video. The second signature sequence 370 represents the content of an entire second version of the video.

At least a portion of the first signature sequence 340 then is compared to the second signature sequence 370 to determine whether there are any matches. If not, then this means that the range of interest 330 has been removed from the second version of the video. If there is a match, then the recovered range of interest 380 is sent as output. It should be noted that depending on the matches made by the signature matching module 370, the recovered range of interest 380 may be all or a portion of the original range of interest 330. For example, if the range of interest 330 include 100 frames and the second version of the video has had 50 of the original 100 frames removed, then the signature matching module 370 will be able to determine that the 50 frames have been removed and that the remaining 50 frames are included in the recovered range of interest 380. By matching up the first signature sequence 340 to the second signature sequence 360, the video position identification system 200 can determine where in the second version of the video the first signature sequence 340 belongs. Thus, the video position identification system 200 identifies in the second version of the video the position corresponding to the range of interest 330 in the first version of the video.

The signature matching module 370 includes a sequential signature module 830, a matching threshold module 840, a distance comparison module 850, and a reliability module 860. The sequential signature module 830 takes a sequence of sequential signatures. The matching threshold module 840 determines a matching threshold to be used. The distance comparison module 850 uses the sequence of sequential signatures and the matching threshold and compares two signatures. If a distance exceeds the matching threshold, then the two signatures do not match. Otherwise, the signatures match. The reliability module 860 determines if the signatures are reliable. If not, then the match (or lack of a match) is suspect.

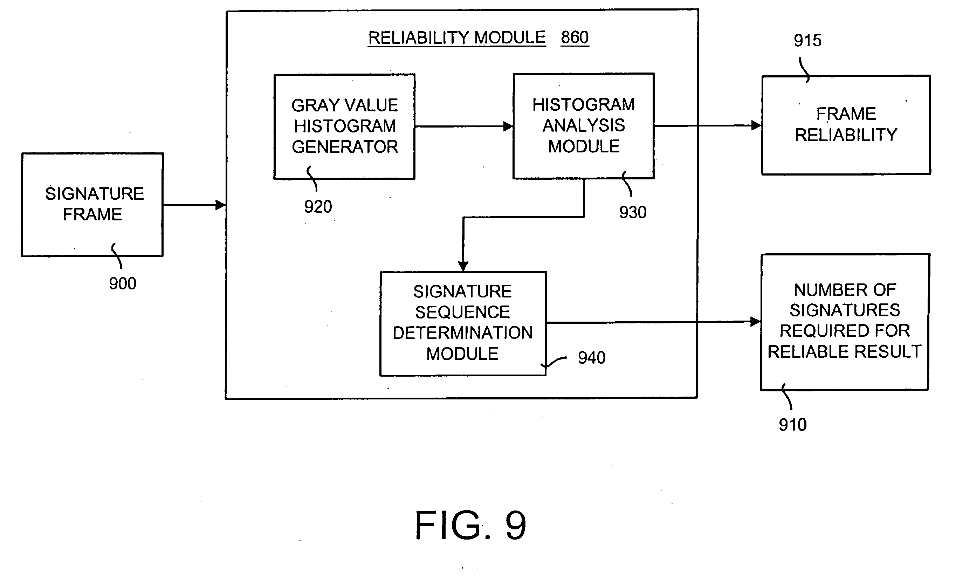

FIG. 9 is a detailed block diagram of the reliability module 860 shown in FIG. 8. Generally, the reliability module 860 inputs a signature frame 900 and outputs a number of signatures required for a reliable result 910 and a frame reliability 915. The reliability module 860 includes a gray value histogram generator 920, a histogram analysis module 930, and a signature sequence determination module 940. The gray value histogram generator 920 provides gray values of each pixel in the signature frame 900 and generates a histogram of these values. The histogram analysis module 930 analyzes the histogram to determine the stability of the signature frame 900. If the shape of the histogram is a single "spike" shape, the signature frame 900 is less reliable. The spike shape indicates that all the pixels in the image have a similar intensity, which means that there is not much identifiable detail in the image.

Based on the calculated reliability of the signatures, the signature sequence determination module 940 determines the most informative portion of the signature sequence needed for a robust match. In a preferred embodiment, the entire signature is used. However, in alternate embodiments, the signature sequence determination module 940 may determine that only a portion of the signature (such as the upper right-hand quarter of the frame) is needed. In general, in areas of lower reliability the signature sequence will need to contain a greater number of signatures to provide a robust match. If the histogram is more spread-out, then the signature contains more contrasting detail. High contrasting detail means that the signature more reliable identifies the frame image from which it was generated.

### IV. Operational Overview

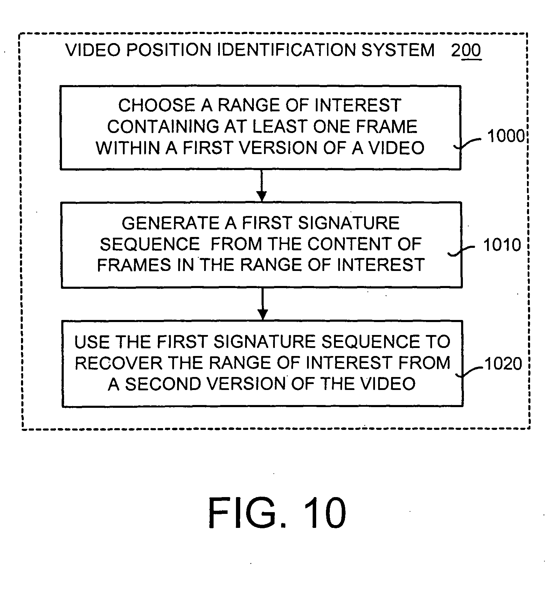

The video position identification system 200 described above uses a video position identification method to reliably and robustly identify position in videos. FIG. 10 is a general flow diagram illustrating the operation of the video position identification system 200 shown in FIGS. 3A-C. The method begins by choosing a range of interest within a first version of a video (box 1000). This range of interest may be chosen by a human user or by an automated system. The range of interest contains at least one frame, but typically contains a great deal more. In addition, information (such as annotations) are created within the range of interest. Next, a first signature sequence is generated from the content of the one or more frames within the range of interest (box 1010). The generated of the first signature sequence (or video anchor) robustly anchors annotations to the range of interest. Finally, the first signature sequence is used to later recover the range of interest from a second version of the video (box 1020). In one embodiment, the first version and the second version of the video are the same video and the range of interest is to be recovered later for the same video. In another, more typical embodiment, the two versions of the video are different and the recovered range of interest is not on the first version of the video where the first signature sequence was generated. This video position identification process can survive modifications to the video such as the removal or addition of frames and each of the frames within the range of interest being changed somehow (such as the color spectrum of each frame changing, compression parameters changing, or noise being added). In addition, the method can survive scaling of the frames and a small amount of cropping.

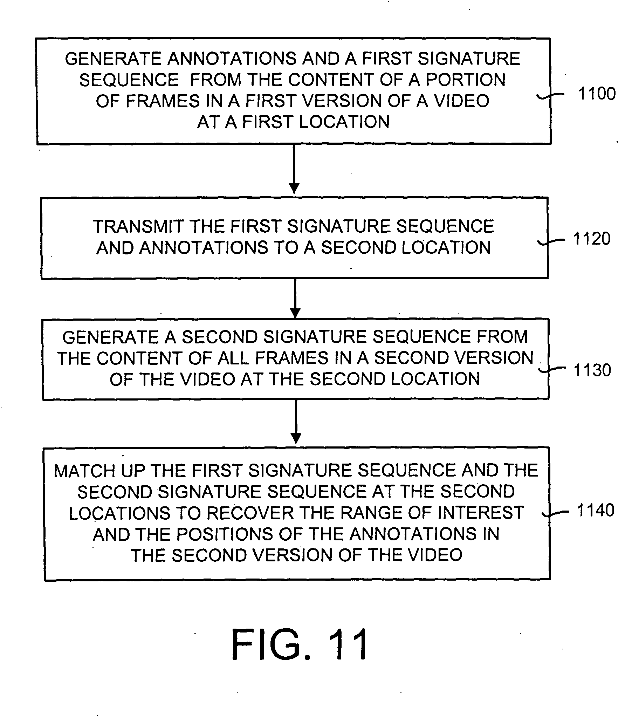

FIG. 11 is a flow diagram illustrating additional details of the operation of the video position identification system method shown in FIG. 10. The method begins by generating annotations and a first signature sequence from the content of a portion of frames from a first version of a video at a first location (box 1100). Next, the first signature sequence and the annotations are transmitted to a second location (box 1110). It should be noted that if the annotations are for a particular part of the video, then only some signatures need to be extracted. There is no need to generate or extract all signatures. This is because a user at the first location is choosing what part of the video interests the user. Signatures for that part of the video then are generated, which serves as a unique identification for that part of the video.

Next, a second signature sequence is generated from the content of all frames in a second version of the video at the second location (box 1130). In a sense, this process generates a topographical map of the second version of the video because the second signature sequence determines the different features of the second video version. Finally, the first signature sequence and the second signature sequence are matched at the second location. This recovers the range of interest and the positions of the annotations in the second version of the video (box 1140). This matching allows the annotations to be placed at correct positions in the second video version. Matching is performed by starting at a beginning of the second video version and comparing the first signature sequence to each signature in the second signature sequence. In this fashion, the desired signature (and thus, the desired location), if contained in the second video version, may found.

### V. Operational Details of a Working Example

The operational details of an exemplary embodiment of the video position identification method will now be presented within the framework of a working example. It should be noted that this following working example is only one embodiment of the invention and is presented for illustrative purposes only. The discussion be divided into the two main processes of the video position identification method: (a) signature generation and extraction (or feature extraction); and (b) signature matching.

### Signature Generation and Extraction

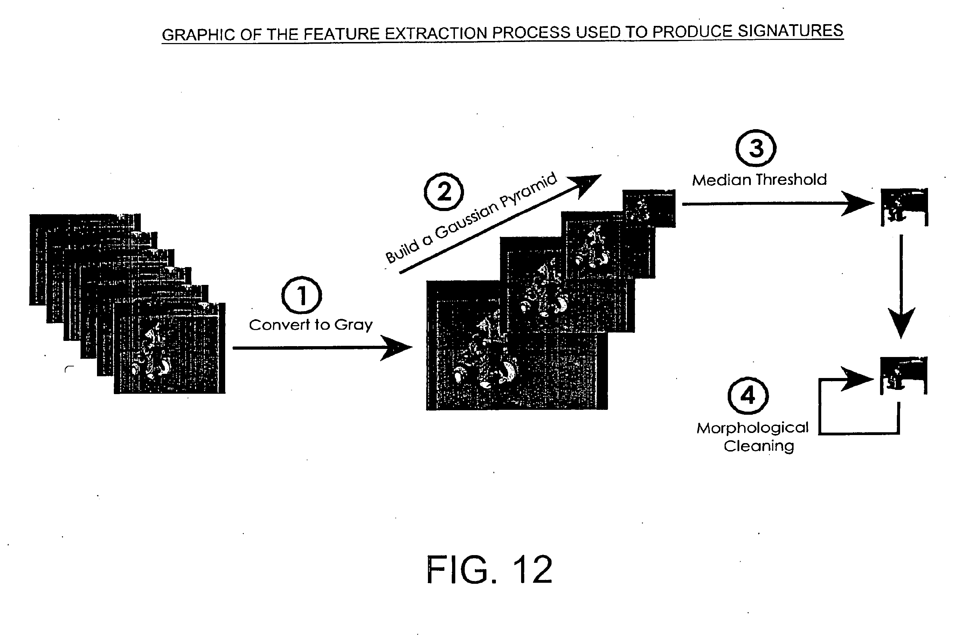

FIG. 12 illustrates the details of the signature generation and extraction (or feature extraction) process used to produce signatures in the working example. Signatures are representations of the content contained in each video frame. Signatures are not based on statistical techniques (such as color histograms) but rather exploit spatial characteristics in the video frame. In general, the signature generation and extraction process in this working example continually simplifies each video frame as follows: from full-size color image to a black and white image; from black and white full size down to a small size image; from the small size image to a bitmap of 1's and 0's; from the small 0/1 bitmap with noise to a smoothed small 0/1 bitmap without noise.

More specifically, referring to FIG. 12, the signature generation and extraction process of the working example began by normalizing each frame in a frame sequence to a 4:3 aspect ratio and discard any color information (circle 1). Next, the resultant image was downsampled to produce a 30x40 gray scale image (circle 2). The size 30x40 was chosen because it is the terminus of downsampling from a standard size video.

Next, median thresholding was performed to produce a 0/1 bitmap (circle 3). In this working example, a pixel value of "1"=white and "0"= black. However, this pixel value assignment was not critical, and the pixel values could have easily been reversed. Median thresholding was performed by determining the median gray value of the downsampled image. This median gray value was defined as the threshold. Thus, everything above the threshold (i.e., the median gray value) was a "1" and everything below the threshold (i.e., the median gray value) was a "0". It should be noted that the median gray value was chosen for each frame. Thus, the threshold could vary for each frame.

Choosing a threshold median gray value for each frame is important because if a single threshold for all of the frames was chosen, then some of the frames would have been less discriminatory and other frames would have had a greater discriminatory power. Generally, the greatest discriminatory power occurs when the number of 1's and 0's is approximately equal. Thus, the closer a frame comes to having an equal number of 1's and 0's, then the closer the frame is to having maximum discriminatory power. This is because a balance of 1's and 0's within a frame gives the most varied information of the frame. For example, if the frame contained mostly 0's, the frame would be mostly black (assuming that "0" was set equal to black) and would contain little information. Similarly, if the frame contained mostly 1's, the frame would be mostly white and contain little information.

What was left was a signature frame that contained an approximately equal number of 1's and 0's. However, as is typical, there were also a lot of noisy aspects to the frame. For example, there were white pixels surrounded by black pixels, which gave a "salt and pepper" effect. This is discriminative, but too discriminative. In other words, the image gave too much detail about what was occurring in a particular frame.

In order to smooth out the noise, morphological cleaning was used to "clean" the image and remove line detail artifacts (circle 4). Morphological cleaning ("kernel filtering" or "k-filtering" for short) was performed on the 0/1 bitmap since thresholding may introduce unrepresentative noise. In this working example, a 3x3 "k-filter" was applied. This 3x3 k-filter set the pixel output to be 1 if more than k pixels are 1, and 0 otherwise. This was performed iteratively several times across the entire 0/1 bitmap. After each iteration, the kernel (k) used for the morphological cleaning was adjusted. Initially, k=4.5, which meant that the iteration started with a 3x3 median filter. If during the iterations the number of 1's decreased, then the value of k was decreased to produce more 1's in the next iteration. Similarly, if the number of 1's grew then the value of k was increased. This insured that the balance of 1's and 0's was maintained, and thus maintained maximum discriminatory power for each signature.

K-filtering was terminated when the number of pixels updated in a given iteration fell below some epsilon. In this working example, the value of epsilon was 5. In practice, this termination generally occurs after 5 to 8 iterations. The result was a 1200-bit 0/1 bitmap that was a "long" signature.

The working example used two different techniques to downsample the long signature and create a short signature. In this working example, the long signature contains 1200 bits and the short signature contains 128 bits. The first downsample technique used was the random mask technique. A single random mask used was sampling all of the signatures. It should be noted that the random mask technique does not involve using a different random collection of bits for each of the different signatures. Instead, the same random collection of bits from each of the different signatures is taken. For example, if the random mask says take the first, fifth and seventh bits, then the first, fifth and seventh bits are taken from all of the signatures.

The second downsample technique used in the working example was the modified Principal Component Analysis (PCA). The PCA technique obtained a large number data points (in this case, video signatures) and determined the primary dimensions that characterized the data. Specifically, PCA was performed by determining the eigenvectors for the data and the corresponding eigenvalues. Whichever eigenvectors had the highest eigenvalues were selected as the principal dimensions or the principal components for characterizing the data. The eigenvectors are the lines that define the plane of the data. This simplifies the problem from a three-dimensional (3D) problem to a two-dimensional (2D) problem. This is also known as a dimensionality reduction. In this working example, a dimensionality reduction was performed from 1200 bits (the number of bits in a long signature) to the 128 bits (the number of bits in a short signature).

The traditional way to perform PCA is to take all of the examples of long fingerprints from the video and run PCA on them, identify all of the eigenvectors and all of the eigenvalues, and then choose the top 128 of them. These are then the 128 bits that should be chosen from the 1200 bits as the short signature. This traditional way of performing PCA, however, is computationally expensive.

Instead, the working example used the modified PCA used in the invention where all 1200 bits of the long signature were examined and a 1200-bin histogram was generated. Next, the number of times each bit was "1" and the number of times each bit was "0" was logged. The bits in the long signature whose value was closest to being half of the time "1" and half of the time "0" (i.e. 50-50) were defined as the most discriminative. By most discriminative it is meant that that particular bit will yield the most information, more information that a less discriminative bit.

After the histogram was built, the 128 most discriminative bits based on the criteria above were determined. These 128 bits were used to generate a mask for the short signature. The mask then was applied to the long signature such that the bits of the long signature were sampled and a short signature was generated.

It should be noted that other embodiments may include a ''frequency of variance" criteria for each bit. Frequency of variance means that each of the bits of the long signature must vary with a certain frequency. For example, this frequency of variance feature would not allow a bit to be "1" for the first 500 frames of the video and then "0" for next 500 frames.

### Signature Matching

Once signatures have been generated in a first version of a video and a second version of the video, the signatures must be matched up to identify a desired position in the second version of the video. Given a first signature sequence that identifies some unique region (or range of interest) in the first version video, and given a second signature sequence of the second version video, the video position identification method recovers the positions in the range of interest in the second version video that were originally from the first version video.

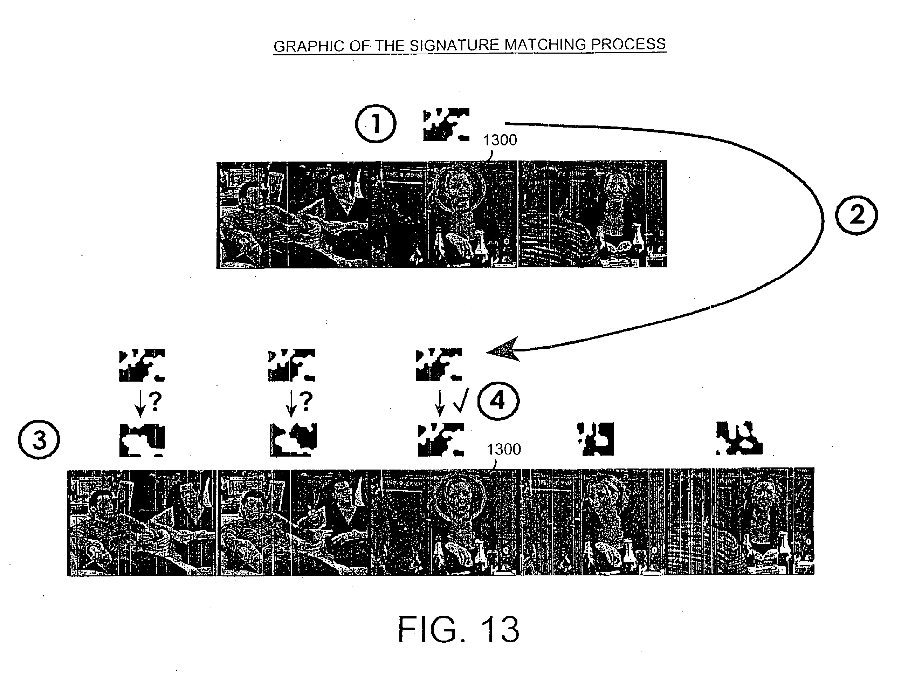

FIG. 13 illustrates the details of the signature matching process used to recover positions in the working example. In this working example, a user initially created an annotation (shown by the circle 1300) from a local range of interest in a first version of the video. A first signature sequence then was generated and extracted as described above (circle 1). The annotation information then was transmitted along with the first signature sequence to an annotation consumer (circle 2). A second signature sequence was generated and extracted as described above from the full length of the second version video, or consumer's version of the video (circle 3). The signature matching process was used to compare the first signature sequence to each of the signatures in the second signature sequence until the closest match was found (circle 4).

Signature matching was performed by taking the first signature sequence and marching along the second version video starting at the beginning and comparing them. In this working example, 10 sequential signatures were obtained from the first signature sequence and compared to each signature in the second signature sequence, starting from the beginning of the second version video. As explained in detail below, a match occurred when the two signatures were approximately below a matching threshold. When this happened, the sequence signatures were defined as matching. The position in the second signature sequence corresponding to where the match occurred was the desired position in the second version video. In other words, the desired position in the second version video corresponded to the position or range of interest selected by the user in the first version video.

Although the number of sequential signatures in a signature sequence in the working example was equal to 10, in other implementations the number could be different. For example, the sequence number could be more than 10 (for example, 100 or 1000). The sequence number determines the amount of information being searched. For instance, if a sequence of 10 signatures is chosen and the second video is searched, a smaller amount of information is being searched than would be if a sequence number of 100 was chosen. With a smaller number of signatures being search, the search is more flexible, but there is little detail information available. On the other hand, if the sequence number is equal to 1000 such that a block of 1000 signatures is used, there is a much larger amount of information and greater detail.

### Matching and Reliability

As explained below, when the reliability of a match is high the sequence number can be low such that smaller blocks of signatures are used in the signature matching process. This provides little detail but greater flexibility. However, if the reliability of the match is low, the sequence number can be higher to provide greater detail and improve the reliability of the match.

In the working example, to determine whether two signatures matched, the number of bits that differed between each frames' long signatures was counted. This is known as the Hamming distance. If the Hamming distance was above the matching threshold, then the signatures did not match. On the other hand, if the Hamming distance was below the matching threshold, then the two signatures did match. Empirical testing showed that frames closer than 125 bits are the same, while frames more than 125 bits apart are different.

In addition to performing the matching, the working example used reliability feature of the invention to calculate a reliability score for each frame. This reliability score reflects the amount of variance in the frame. If there is a high variance, matches in involving the frame's signature are more reliable.

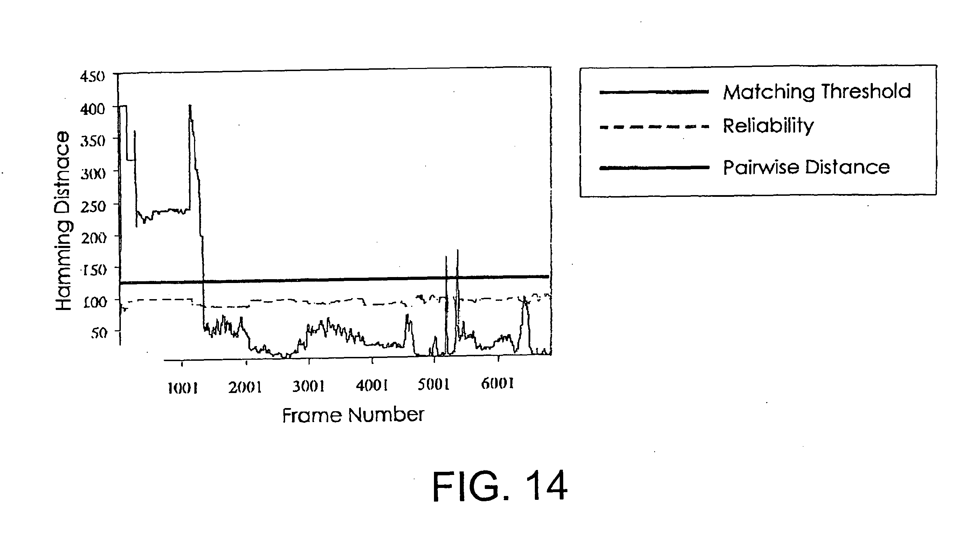

FIG. 14 is a graph illustrating the reliability feature used in the working example. Referring FIG. 14, two videos were used, which a human being would identify as being the same video, but which differed in subtle ways, such as containing different commercials and different compression techniques. The first version of the video, which was a baseball game, contained just the video. The second version of the video was the baseball game, but with the first part replaced with a sequence of commercials. The total length of the first and second videos was identical. The first N frames did not match, but all of the frames after the N frames were identical and corresponded to each other. The first signature sequence from the first version video and the second signature sequence from the second version video were parallized and paired. For the first 1200 or so frames, the pairwise distance line (the dark solid line, which is the distance between corresponding pairs of frames), was a long distance above the threshold line (the light solid line, or Hamming distance threshold). In this case, when the pairwise distance line was above the threshold line, the signature pairs did not match. Similarly, when the pairwise distance line was below the threshold line, the signature pairs did match. It should be noted that when corresponding pairs match their distance was not always zero. This is because the two versions of the videos differ by some compression ratio or other added noise.

The dotted line on the graph in FIG. 14 is the reliability line. The reliability line is a measure and an indicator of reliable signatures. Referring to FIG. 14, at the beginning frames of the graph the reliability line goes down. Similarly, at approximately frames 5100, and 5300 the reliability line dips considerably. These dips indicate that the signatures were not reliable. It is at these points that there are erroneous matches or non-matches. For example, at approximately frame 1, there is a false positive match where a match was indicated when in fact the two signatures did not match. This mistake was made because, as indicated by the reliability line, the reliability was low. At frames 5100 and 5300, there are false negatives. Here, a match between the two signatures was indicated even though it is known by the design of the experiment that they did not match. This error was made because the reliability of the signatures of those frames was low.

Thus, the reliability is a measure by which it can be said that relatively more information in the neighborhood (i.e., more signatures) is needed to make a decision about where the region belongs in the video. In other words, if the reliability of the signatures in the sequence that you have are low, then a relatively longer sequence is required to locate it in the video. If the signatures all have a high reliability, then relatively shorter signature sequences can be used and matches still will be able to be identified accurately. Thus, in areas of lower reliability a larger contiguous signature sequence can be used (such as, instead of 10 contiguous signatures, use say 100 contiguous signatures).

### VI. Exemplary Operating Environment

The video position identification process and system described above is designed to operate in a computing environment. The following discussion is intended to provide a brief, general description of a suitable computing environment in which the video position identification process and system may be implemented.

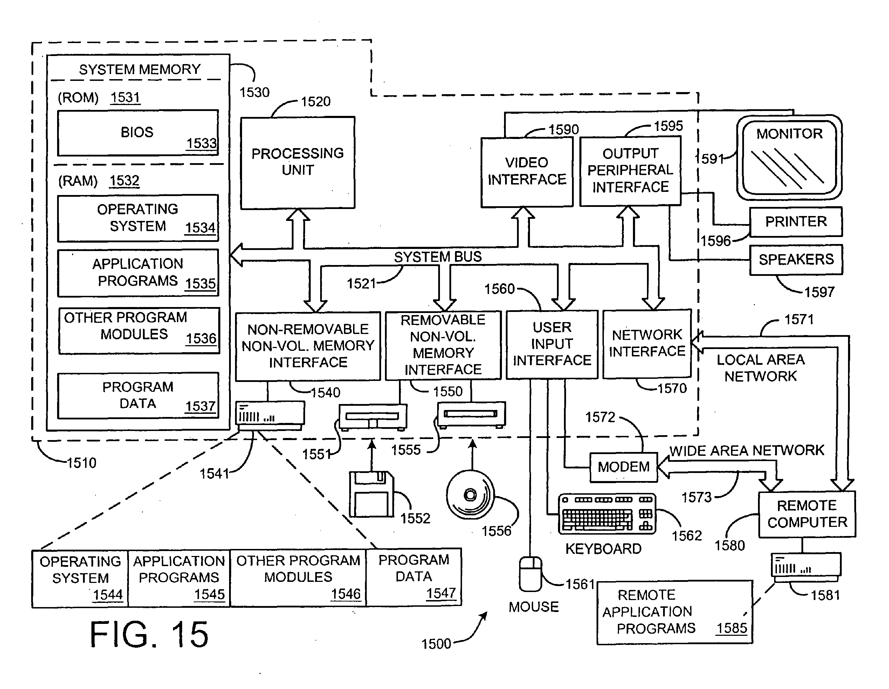

FIG. 15 illustrates an example of a suitable computing system environment 1500 in which the video position identification process and system may be implemented. The computing system environment 1500 is only one example of a suitable computing environment and is not intended to suggest any limitation as to the scope of use or functionality of the invention. Neither should the computing environment 1500 be interpreted as having any dependency or requirement relating to any one or combination of components illustrated in the exemplary operating environment 1500.

The video position identification process and system is operational with numerous other general purpose or special purpose computing system environments or configurations. Examples of well known computing systems, environments, and/or configurations that may be suitable for use with the video position identification process and system include, but are not limited to, personal computers, server computers, hand-held, laptop or mobile computer or communications devices such as cell phones and PDA's, multiprocessor systems, microprocessor-based systems, set top boxes, programmable consumer electronics, network PCs, minicomputers, mainframe computers, distributed computing environments that include any of the above systems or devices, and the like.

The video position identification process may be described in the general context of computer-executable instructions, such as program modules, being executed by a computer. Generally, program modules include routines, programs, objects, components, data structures, etc., that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices. With reference to FIG. 15, an exemplary system for implementing the video position identification process and system includes a general-purpose computing device in the form of a computer 1510.

Components of the computer 1510 may include, but are not limited to, a processing unit 1520, a system memory 1530, and a system bus 1521 that couples various system components including the system memory to the processing unit 1520. The system bus 1521 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 1510 typically includes a variety of computer readable media. Computer readable media can be any available media that can be accessed by the computer 1510 and includes both volatile and nonvolatile media, removable and non-removable media. By way of example, and not limitation, computer readable media may comprise computer storage media and communication media. Computer storage media includes volatile and nonvolatile removable and non-removable media implemented in any method or technology for storage of information such as computer readable instructions, data structures, program modules or other data.

Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by the computer 1510. Communication media typically embodies computer readable instructions, data structures, program modules or other data in a modulated data signal such as a carrier wave or other transport mechanism and includes any information delivery media.

Note that the term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 1530 includes computer storage media in the form of volatile and/or nonvolatile memory such as read only memory (ROM) 1531 and random access memory (RAM) 1532. A basic input/output system 1533 (BIOS), containing the basic routines that help to transfer information between elements within the computer 1510, such as during start-up, is typically stored in ROM 1531. RAM 1532 typically contains data and/or program modules that are immediately accessible to and/or presently being operated on by processing unit 1520. By way of example, and not limitation, FIG. 15 illustrates operating system 1534, application programs 1535, other program modules 1536, and program data 1537.

The computer 1510 may also include other removable/non-removable, volatile/nonvolatile computer storage media. By way of example only, FIG. 15 illustrates a hard disk drive 1541 that reads from or writes to non-removable, nonvolatile magnetic media, a magnetic disk drive 1551 that reads from or writes to a removable, nonvolatile magnetic disk 1552, and an optical disk drive 1555 that reads from or writes to a removable, nonvolatile optical disk 1556 such as a CD ROM or other optical media.

Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 1541 is typically connected to the system bus 1521 through a non-removable memory interface such as interface 1540, and magnetic disk drive 1551 and optical disk drive 1555 are typically connected to the system bus 1521 by a removable memory interface, such as interface 1550.

The drives and their associated computer storage media discussed above and illustrated in FIG. 15, provide storage of computer readable instructions, data structures, program modules and other data for the computer 1510. In FIG. 15, for example, hard disk drive 1541 is illustrated as storing operating system 1544, application programs 1545, other program modules 1546, and program data 1547. Note that these components can either be the same as or different from operating system 1534, application programs 1535, other program modules 1536, and program data 1537. Operating system 1544, application programs 1545, other program modules 1546, and program data 1547 are given different numbers here to illustrate that, at a minimum, they are different copies. A user may enter commands and information into the computer 1510 through input devices such as a keyboard 1562 and pointing device 1561, commonly referred to as a mouse, trackball or touch pad.

Other input devices (not shown) may include a microphone, joystick, game pad, satellite dish, scanner, radio receiver, or a television or broadcast video receiver, or the like. These and other input devices are often connected to the processing unit 1520 through a user input interface 1560 that is coupled to the system bus 1521, but may be connected by other interface and bus structures, such as, for example, a parallel port, game port or a universal serial bus (USB). A monitor 1591 or other type of display device is also connected to the system bus 1521 via an interface, such as a video interface 1590. In addition to the monitor 1591, computers may also include other peripheral output devices such as speakers 1597 and printer 1596, which may be connected through an output peripheral interface 1595.

The computer 1510 may operate in a networked environment using logical connections to one or more remote computers, such as a remote computer 1580. The remote computer 1580 may be a personal computer, a server, a router, a network PC, a peer device or other common network node, and typically includes many or all of the elements described above relative to the computer 1510, although only a memory storage device 1581 has been illustrated in FIG. 15. The logical connections depicted in FIG. 15 include a local area network (LAN) 1571 and a wide area network (WAN) 1573, but may also include other networks. Such networking environments are commonplace in offices, enterprise-wide computer networks, intranets and the Internet.

When used in a LAN networking environment, the computer 1510 is connected to the LAN 1571 through a network interface or adapter 1570. When used in a WAN networking environment, the computer 1510 typically includes a modem 1572 or other means for establishing communications over the WAN 1573, such as the Internet. The modem 1572, which may be internal or external, may be connected to the system bus 1521 via the user input interface 1560, or other appropriate mechanism. In a networked environment, program modules depicted relative to the computer 1510, or portions thereof, may be stored in the remote memory storage device. By way of example, and not limitation, FIG. 15 illustrates remote application programs 1585 as residing on memory device 1581. It will be appreciated that the network connections shown are exemplary and other means of establishing a communications link between the computers may be used.

The foregoing description of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description of the invention, but rather by the claims appended hereto.

## Claims

1. A method for processing a video, comprising:
generating a first signature sequence from content of a first version of the video;
generating a second signature from content of a second version of the video; and
comparing the first and second signature sequences to determine a match.

2. The method as set forth in claim 1, wherein content includes as least one of: (a) visual content in a video frame; (b) audio track video frame content; (c) audio that has been synchronized with the video; (d) closed captioning information.

3. The method as set forth in claim 1, wherein generating a first signature sequence further comprises generating annotations at positions in a range of interest in the first version of the video.

4. The method as set forth in claim 3, wherein the range of interest contains at least one video frame.

5. The method as set forth in claim 4, wherein the first signature sequence contains signatures that represent content of frames in the range of interest.

6. The method as set forth in claim 1, wherein the second signature sequence is generated from content of the entire length of the second version of the video.

7. The method as set forth in claim 3, wherein comparing the first and second signature sequences further comprises recovering positions of the annotations in the second version of the video corresponding to the positions of the annotations in the first version of the video.

8. A computer-readable medium having computer-executable instructions for performing the method recited in claim 1.

9. A method for processing a video, comprising:
choosing a range of interest within the video containing at least one video frame;
generating a first signature sequence from content of the at least one video frame; and
using the first signature sequence to later recover at least a portion of the range of interest.

10. The method as set forth in claim 9, wherein the first signature sequence is generated from content of a first version of the video.

11. The method as set forth in claim 10, further comprising generating a second signature sequence from the content of a second version of the video.

12. The method as set forth in claim 11, further comprising matching the first signature sequence and the second signature sequence.

13. A method for identifying a position in a video, comprising:
annotating a video frame located at a position in a first version of the video to generate a video annotation;
generating a video annotation anchor based on content of the video frame to robustly anchor the video annotation; and
using the video annotation anchor to recover the position in a second version of the video at which to place the video annotation.

14. The method as set forth in claim 13, wherein the video annotation anchor is generated using content-based video timelines.

15. The method as set forth in claim 13, wherein generating the video anchor further comprises:
defining a temporal range of interest corresponding to a set of video frames in the first version of the video; and
generating a first signature sequence from content within the range of interest.

16. One or more computer-readable media having computer-readable instructions thereon which, when executed by one or more processors, cause the one or more processors to implement the method of claim 13.

17. A process for creating an annotation in a first version of a video at a first location and viewing the annotation in a second version of the video at a second location, comprising:
creating an annotation of video frames at a position in the first version of the video;
generating a first signature sequence from content in the video frames;
generating and extracting a second signature sequence from all video frames in the second version of the video;
transmitting the annotation and the first signature sequence from the first location to the second location; and
matching the first signature sequence with the second signature sequence to recover the position of the annotation in the second version of the video.

18. The method as set forth in claim 17, wherein the annotation and the first signature sequence are transmitted from the first location to the second location by a narrow communications channel.

19. The method as set forth in claim 18, wherein the narrow communications channel is at least one of: (a) e-mail; (b) a cellular telephone; (c) the Internet; (d) instant messaging services.

20. The method as set forth in claim 17, wherein transmitting the annotation and the first signature sequence from the first location to the second location is performed by a user.

21. The method as set forth in claim 17, wherein transmitting the annotation and the first signature sequence from the first location to the second location is performed automatically.

22. A process for identifying positions of video frames in a video, comprising:
marking video frames at positions in a first version of the video to create marked video frames;
generating signatures from content of each of the video frames to create a first signature sequence;
generating a second signature sequence from an entire content of a second version of the video; and
matching the first and second signature sequences to recover the position of the marked video frames in the second version of the video.

23. The process as set forth in claim 22, further comprising removing the marked video frames from the second version of the video to create a video summary.

24. The process as set forth in claim 22, further comprising:
adding third-party content to the marked frames; and
using the recovered position of the marked video frames to synchronize the third-party content to the second version of the video.

25. The process as set forth in claim 22, further comprising removing the marked video frames from the second version of the video, wherein the marked frames contain commercial-related content such as commercials.

26. The process as set forth in claim 22, where the process is used for at least one of: (a) indexing of the video; (b) video digital rights management; (c) video database queries.

27. A computer-readable medium having computer-executable instructions for obtaining a representation of content contained in a video frame of a video, comprising:
discarding any color information in the video frame to produce a resultant image;
downsampling the resultant image to produce a gray scale image;
performing median thresholding on the gray scale image to produce a 0/1 bitmap version of the video frame; and
cleaning the 0/1 bitmap version of the video frame using morphological cleaning to produce a long signature of the video frame.

28. The computer-readable medium of claim 27, further comprising normalizing the video frame to a 4:3 aspect ratio.

29. The computer-readable medium of claim 27, wherein the gray scale image is 30 pixels by 40 pixels.

30. The computer-readable medium of claim 27, wherein each pixel in the 0/1 bitmap have a value of one of: (a) 0; (b) 1.

31. The computer-readable medium of claim 27, wherein performing median thresholding further comprises:
determining a median gray value of the gray scale image; and
defining the median gray value as a threshold.

32. The computer-readable medium of claim 31, further comprising:
defining pixels in the video frame having an intensity value above the threshold as a "1"; and
defining pixels in the video frame having an intensity value below the threshold as a "0".

33. The computer-readable medium of claim 27, wherein morphological cleaning includes kernel filtering (k-filtering) to remove line detail artifacts and other noise from the 0/1 bitmap version of the video frame.

34. The computer-readable medium of claim 33, wherein cleaning the 0/1 bitmap version of the video frame using morphological cleaning further comprises applying a 3x3 k-filter to the 0/1 bitmap version of the video frame such that the output of the filter equals 1 if more than k number of pixels in the video frame are 1, and output of the filter equals 0 otherwise.

35. The computer-readable medium of claim 34, further comprising adjusting the value of k after each iteration.

36. The computer-readable medium of claim 35, wherein adjusting the value of k further comprises:
decreasing the value of k to produce more 1's in next iteration if a number of 1's decreases; and
increasing the value of k to produce fewer 1's in the next iterations the number of 1's increases.

37. The computer-readable medium of claim 35, wherein the value of k at a first iteration equals 4.5.

38. The computer-readable medium of claim 35, further comprising terminating k-filtering when a number of pixels in a given iteration falls below an epsilon.

39. The computer-readable medium of claim 38, wherein the value of epsilon equals 5.

40. A method for reducing a dimensionality of a long signature containing a number of bits that represent a content of a video frame, comprising:
determining eigenvectors for the long signature and the corresponding eigenvalues;
selecting principal components from the eigenvalues that characterize the long signature; and
producing a short signature having less than the number of bits in the long signature from the principal components.

41. The method as set forth in claim 40, wherein selecting principal components further comprises finding eigenvalues having the highest value and defining those highest value eigenvalues as the principal components.

42. A process for downsampling a long signature having n bits into a short signature having less than n bits, comprising:
generating a histogram containing n bins, with each bin representing a bit;
counting a number of times each bit equals 1 and a number of times each bit equals 0;
determining most discriminative bits in the histogram to generate a mask; and
downsampling the long signature using the mask to generate the short signature.

43. The process as set forth in claim 42, wherein determining the most discriminative bits further comprises finding which bits are closest to being half the time equal to 1 and half the time equal to 0.

44. A method for matching signatures a first signature sequence generated from a first version of a video and a second signature sequence generated from a second version of the video, comprising:
determining a sequential signature number representing a number of sequential signatures to compare;
finding a beginning of the second version of the video; and
determining a match by comparing the sequential signature number of the first signature sequence to the sequential signature number of the second signature sequence.

45. The method as set forth in claim 44, wherein a smaller sequential signature number indicates a smaller amount of information and little detail and a larger sequential signature number indicates a greater amount of information and greater detail.

46. The method as set forth in claim 44, wherein the sequential signature number equals 10.

47. The method as set forth in claim 44, wherein determining a match further comprises:
counting a number of bits that differ between the first and the second signature sequences; and
finding a match when the number of bits is below a matching threshold.

48. The method as set forth in claim 47, wherein the matching threshold is approximately 125 bits.

49. The method as set forth in claims 44, further comprising calculating a reliability score for each frame in the video.

50. The method as set forth in claim 49, wherein the reliability score represent an amount of variance in each frame, and further comprising:
determining that the match is more reliable if the reliability score is high and the variance in each frame used in the match is high; and
determining that the match is less reliable if the reliability score is low and the variance in each frame used in the match is low.

51. A video position identification system, comprising:
a signature generation and extraction module that generates a first signature sequence based on content from a first version of a video and a second signature sequence based on content from a second version of the video; and
a signature matching module that matches the first signature sequence and the second signature sequence to recover a range of interest.

52. The video position identification system as set forth in claim 51, wherein the signature generation and extraction module further comprises a gray scale converter that converts a video frame of the video to gray scale at a current resolution to produce a gray scale video frame.

53. The video position identification system as set forth in claim 52, wherein the signature generation and extraction module further comprises a downsample module that downsamples the gray scale video frame to create a low-resolution gray scale video frame.

54. The video position identification system as set forth in claim 53, wherein downsample module constructs a Gaussian pyramid.

55. The video position identification system as set forth in claim 53, wherein the signature generation and extraction module further comprises a median threshold bitmap converter that converts the low-resolution gray scale video frame into a 0/1 bitmap.

56. The video position identification system as set forth in claim 55, wherein the signature generation and extraction module further comprises a morphological cleaning module that generates a long signature by using a video frame's median gray level as a threshold value to ensure that the number of pixels having values of 0 and 1 is approximately equal for the video frame.

57. The video position identification system as set forth in claim 56, wherein the signature generation and extraction module further comprises a short signature module that downsamples the long signature to generate a short signature containing fewer bits than the long signature.

58. The video position identification system as set forth in claim 51, wherein the signature matching module further comprises a sequential signature module that obtains a sequential sequence of signatures from the first and second signature sequences.

59. The video position identification system as set forth in claim 58, wherein the signature matching module further comprises a matching threshold module that determines a matching threshold.

60. The video position identification system as set forth in claim 59, wherein the signature matching module further comprises distance comparison module that uses the sequence of sequential signatures and the matching threshold to compare the distance between signatures.

61. The video position identification system as set forth in claim 58, wherein the signature matching module further comprises a reliability module that determines the reliability of each signature in the first and second signature sequences.
